# EUROPEAN PATENT SPECIFICATION

(11) **EP 1 945 997 B1**
(45) Date of publication and mention of the grant of the patent: **27.08.2014**
(21) Application number: 06848623.2
(22) Date of filing: 08.11.2006
(51) Int. Cl.: F02D 19/02, F17C 7/04, F02M 21/02, F02M 21/06

(54) **SYSTEM AND METHOD FOR DELIVERING A PRESSURIZED GAS FROM A CRYOGENIC STORAGE VESSEL**
SYSTEM UND VERFAHREN ZUR LEITUNG EINES DRUCKGASES AUF EINEM KRYOGENEN SPEICHERGEFÄSS
SYSTEME ET PROCEDE DE DISTRIBUTION D'UN GAZ SOUS PRESSION A PARTIR D'UN RECIPIENT DE STOCKAGE CRYOGENIQUE

(30) Priority: 10.11.2005 CA 2523732
(43) Date of publication of application: 23.07.2008
(73) Proprietor: Westport Power Inc., Vancouver, BC V6P 6G2 (CA)
(72) Inventor: BATENBURG, Greg, North Delta, British Columbia V4C 5YC (CA); GARNER, Gage, Vancouver, British Columbia V6Z 3H8 (CA)
(74) Representative: Von Rohr Patentanwälte Partnerschaft mbB
(86) International application number: PCT/CA2006/001838
(87) International publication number: WO 2007/068081

(56) References cited:
- EP-A2- 1 308 667
- WO-A1-03/031817
- WO-A2-03/046432
- JP-A- 2005 351 189
- US-A- 3 082 690
- US-A- 5 373 702
- US-A- 5 477 690
- US-A- 5 884 488
- US-B2- 6 698 211

## Description

### Field of the Invention

The present invention relates to a system and method for delivering a pressurized gas from a cryogenic storage vessel. In particular, the disclosed system and method reduce thermal shock in the system by controlling a pump for cryogenic fluids so that the temperature of the gas does not drop below a predetermined temperature.

Such a system and method are known from US-A-3 082 690.

### Background of the Invention

At cryogenic temperatures a gas can be stored in a storage vessel in liquefied form to achieve a higher storage density, compared to the same gas stored in the gaseous phase. For example, higher storage density is desirable when the gas is employed as a fuel for a vehicle because the space available to store fuel on board a vehicle is normally limited.

Another advantage of storing a gas in liquefied form is lower manufacturing and operating costs for the vessel. For example, storage vessels can be designed to store a liquefied gas at a cryogenic temperature at a saturation pressure less than 2 MPa (about 300 psig). Compressed gases are commonly stored at pressures above 20 MPa (about 3000 psig), but vessels that are rated for containing gases at such high pressures require a structural strength that can add weight and/or cost to the vessel. In addition, because of the lower storage density of gas stored in the gaseous phase, the size and/or number of vessels must be larger to hold the same molar quantity of gas and this adds to the weight, cost and space required to mount the storage vessels if the gas is stored in the gaseous phase. Extra weight also adds to operational costs if the vessel is used in a mobile application, since the extra weight adds to the load that is carried by the vehicle. For the same molar quantity of gas, the weight of the storage vessels for holding the gas at high pressure in the gaseous phase can be two to five times greater than the weight of the storage vessels for holding the same gas at lower pressure in liquefied form.

The desired temperature for storing a liquefied gas depends upon the particular gas. For example, at atmospheric pressure, natural gas can be stored in liquefied form at a temperature of minus 160 degrees Celsius, and a lighter gas such as hydrogen can be stored at atmospheric pressure in liquefied form at a temperature of minus 253 degrees Celsius. As with any liquid, the boiling temperature for the liquefied gas can be raised by holding the liquefied gas at a higher pressure. The term "cryogenic temperature" is used herein to describe temperatures less than minus 100 degrees Celsius, at which a given gas can be stored in liquefied form at pressures less than 2 MPa (about 300 psig). To hold a liquefied gas at cryogenic temperatures, the storage vessel defines a thermally insulated cryogen space. Storage vessels for holding liquefied gases are known and a number of methods and associated apparatuses have been developed for removing liquefied gas from such storage vessels.

When a gas is stored at cryogenic temperatures and the end user uses the gas in gaseous form at temperatures above zero degrees Celsius some of the challenges with such a system include supplying the gas without excessive thermal shock to components in the delivery system, reducing the temperature range for thermal cycling, and preventing freezing of the heat exchange fluid in the vaporizer. With regard to thermal cycling, the broader the temperature range, the more difficult it is for system components such as resilient seals that are exposed to such temperature cycling, and this can shorten the lifecycle of such components. In the example of a cryogenic fuel storage system for a vehicle engine that bums a gaseous fuel, the engine coolant can be used as the heat exchange fluid in a vaporizer to heat the fuel and regulate its temperature. However, vehicular fuel systems must be capable of performing under a range of operating conditions, and under some conditions, such as start-up when the engine is below normal operating temperature, or if there is a problem with the vaporizer that is used to vaporize the fuel, the engine coolant may not be able to provide enough thermal energy to keep the temperature of the delivered fuel above a desired temperature, resulting in a broader temperature range for thermal cycling, thermal shock to system components, and more difficult control of fuel combustion since there is more variability in fuel temperature and density. If measures are not taken to prevent the temperature of the delivered fuel from falling below threshold temperature levels, this can subject the system to further problems. For example, because of the cryogenic temperatures involved, moisture in the air can be frozen to cause ice build up on the fuel system components. In addition, if the heat exchange fluid is supplied to the vaporizer at a temperature that is lower than normal, because the cryogenic fluid can enter the vaporizer at temperatures at least as low as -160 degrees Celsius, there is also a danger of freezing the heat exchange fluid inside the vaporizer. If there is freezing up of the downstream components or freezing of the heat exchange fluid, it can take a long time for them to thaw if only the heat from the vaporizer is used to melt the ice build up or frozen heat exchange fluid, and this problem can be compounded by frozen heat exchange fluid restricting the flow of heat exchange fluid through the vaporizer. Thermal shock, thermal cycling, and freezing can each result in permanent damage to system components and/or degraded system performance.

Accordingly, to improve the operability, durability and lifecycle of systems that deliver a pressurized gas from a cryogenic storage vessel, there is a need to prevent thermal shock, freezing up of delivery system components, freezing of the heat exchange fluid in the vaporizer, and to reduce the temperature range for thermal cycling.

### Summary of the Invention

A method is provided of pumping a process fluid from a cryogenic storage vessel and delivering the process fluid to an end user in a gaseous phase. This method comprises:
starting a pump and pumping the process fluid from the storage vessel, thereby pressurizing the process fluid, when process fluid pressure measured downstream from the pump is below a predetermined low pressure threshold;
stopping the pump when the process fluid pressure is above a predetermined high pressure threshold;
directing the process fluid from the pump to a vaporizer and transferring heat from a heat exchange fluid to the process fluid to convert the process fluid from a liquefied form to the gaseous phase;
delivering the process fluid from the vaporizer to the end user; and
measuring process fluid temperature after the process fluid exits the vaporizer and temporarily suspending operation of the pump when the process fluid temperature is below a predetermined threshold temperature and restarting the pump when it has been suspended if at least one predefined enabling condition is satisfied and process fluid pressure is less than the predetermined high pressure threshold.

The present invention further provides a method of pumping a process fluid from a cryogenic storage vessel and delivering said process fluid to an end user in a gaseous phase, the method comprising:
starting a pump and pumping the process fluid from the storage vessel, thereby pressurizing the process fluid, when process fluid pressure measured downstream from the pump is below a predetermined low pressure threshold;
stopping the pump when the process fluid pressure is above a predetermined high pressure threshold;
directing the process fluid from the pump to a vaporizer and transferring heat from a heat exchange fluid to the process fluid to convert the process fluid from a liquefied form to the gaseous phase;
delivering the process fluid from the vaporizer to the end user;
measuring process fluid temperature after the process fluid exits the vaporizer and temporarily suspending operation of the pump when:
   (i) the process fluid temperature is below a predetermined threshold temperature; or
   (ii) the process fluid temperature is below a predetermined threshold temperature for a predetermined number of consecutive pump cycles; and
restarting the pump that has been suspended if at least one predefined enabling condition is satisfied and process fluid pressure is less than the predetermined high pressure threshold.

In this disclosure a distinction is made between a pump that has been "stopped" because process fluid pressure is at or above a predetermined high pressure threshold and a pump that is temporarily "suspended" from operation because process fluid temperature is less than a predetermined threshold temperature. When the pump is stopped, the method does not seek to restart the pump until process fluid pressure drops to the predetermined low pressure threshold. When that pump is temporarily "suspended" it can be restarted when at least one enabling condition is satisfied and the process fluid pressure is less than the predetermined high pressure threshold.

The method can comprise further conditions for temporarily suspending operation of the pump in addition to the enabling conditions for restarting the pump when it has been suspended from operation. For example, the method can comprise not suspending operation of the pump until the process fluid temperature is below the predetermined threshold temperature for a predetermined number of consecutive pump cycles. The number of consecutive pump cycles for this additional condition for temporarily suspending operation of the pump is a predetermined number and can be as low as two. Adding this condition can be advantageous for systems where the temperature sensor is susceptible to producing false temperature readings, which might otherwise result in unnecessarily suspending operation of the pump.

When operation of the pump is temporarily suspended, the method employs one or more predefined enabling conditions for determining when to re-start the pump. All of the disclosed predefined enabling conditions relate to strategies for preventing the temperature of the process fluid in the conduit from dropping below the predetermined temperature threshold. For example, whenever operation of the pump is temporarily suspended because the process fluid temperature is below the predetermined threshold temperature, one of the predefined enabling conditions can be satisfied when the pump has been suspended for a predetermined minimum length of time. This imposed delay provides a longer residency time for the process fluid that is in the vaporizer while the pump operation is suspended, helping to warm the process fluid to a temperature that is above the predetermined temperature threshold. After the predetermined minimum length of time has elapsed, if the process fluid pressure is still below the predetermined high pressure threshold, the pump can be restarted. Another enabling condition can relate directly to the temperature of the process fluid. For example, one of the predefined enabling conditions can be satisfied when process fluid temperature in the conduit downstream from the vaporizer is higher than the threshold temperature or if the process fluid temperature inside the vaporizer itself is higher than another predetermined temperature. Yet another enabling condition can be satisfied when the heat exchange fluid has a temperature measured downstream from the vaporizer that is above a predetermined temperature.

In a preferred method the process fluid is a fuel and the method further comprises delivering the fuel to a combustion chamber of an internal combustion engine. Because the pump in the disclosed system is capable of pressuring the gas to a high pressure, the method is particularly suited for systems in which at least some of the fuel is injected through a fuel injection valve directly into the combustion chamber. In the preferred method, when the process fluid is fuel for an engine, the heat exchange fluid can be engine coolant, wherein the method further comprises directing engine coolant from an engine cooling system to the vaporizer. In this embodiment, the method preferably comprises directing the engine coolant to the vaporizer from an outlet of a cooling jacket for the engine. Hotter heat exchange fluid temperatures improve the effectiveness of the vaporizer so it is preferable to direct the engine coolant to the vaporizer after it has been heated by flowing through the engine's cooling jacket.

The method can be applied to a system that has a plurality of storage vessels, each with a respective pump and vaporizer. For a system with two storage vessels, with the disclosed method the storage vessel is a first one of two storage vessels, the pump is a first one of two pumps, and the vaporizer is a first one of two vaporizers. With this system the method can further comprise:
starting a second pump and pumping the process fluid from a second storage vessel, thereby pressurizing the process fluid when operation of the first pump is temporarily suspended, at least one predefined enabling condition for the second pump is satisfied, and the process fluid pressure downstream from the second pump is below a predetermined high pressure threshold;
stopping the second pump when the process fluid pressure is greater than the predetermined high pressure threshold;
directing the process fluid from the second pump to a second vaporizer and transferring heat from the heat exchange fluid to the process fluid to convert the process fluid from a liquefied form to the gaseous phase;
delivering the process fluid from the second vaporizer to the end user; and
measuring process fluid temperature after the process fluid exits the second vaporizer and temporarily suspending operation of the second pump when the process fluid temperature downstream from the second vaporizer is below the predetermined threshold temperature, and re-starting the first pump if at least one predefined enabling condition for the first pump is satisfied and process fluid pressure is less than the predetermined high pressure threshold.

With the system that has a plurality of storage vessels, each with a respective pump and vaporizer the method can further comprise:
starting a second pump and pumping the process fluid from a second storage vessel, thereby pressurizing the process fluid, when operation of the first pump is temporarily suspended, at least one predefined enabling condition for the second pump is satisfied, and the process fluid pressure downstream from the second pump is below the predetermined high pressure threshold;
stopping the second pump when the process fluid pressure is greater than the predetermined high pressure threshold;
directing the process fluid from the second pump to a second vaporizer and transferring heat from the heat exchange fluid to the process fluid to convert the process fluid from a liquefied form to the gaseous phase;
delivering the process fluid from the second vaporizer to the end user;
measuring process fluid temperature after the process fluid exits the second vaporizer and temporarily suspending operation of the second pump when the process fluid temperature downstream from the second vaporizer is below the predetermined threshold temperature;
re-starting the first pump if at least one predefined enabling condition for restarting the first pump is satisfied, the second pump is temporarily suspended and process fluid pressure is less than the predetermined high pressure threshold; and
re-starting the second pump if at least one predefined enabling condition for restarting the second pump is satisfied, the first pump is temporarily suspended and process fluid pressure is less than the predetermined high pressure threshold.

In systems that comprise a plurality of pumps, one of the enabling conditions for restarting a pump that has been suspended from operation can be satisfied when another one of the plurality of pumps that are in the system performed the previous pump stroke. That is, when the pumps are reciprocating piston pumps that operate in parallel, the predefined enabling condition is satisfied when the suspended pump has been idle for at least the time it takes for another pump to complete an extension and retraction stroke. In some embodiments an additional predefined enabling condition for restarting a pump relates to directing a suspended pump to remain idle for a predetermined minimum length of time. Accordingly, in such embodiments of the method, even if a different pump performed the previous pump stroke, the controller is programmed to keep the suspended pump idle until this additional enabling condition is satisfied. That is, this additional enabling condition is satisfied when the suspended pump has been idle for a predetermined minimum length of time, and after the predetermined minimum length of time has elapsed the suspended pump can be restarted.

The method can comprise other predefined enabling conditions for restarting a suspended pump. For example, another predefined enabling condition for restarting a suspended pump can relate to process fluid temperature. This predefined enabling condition be satisfied when process fluid temperature measured downstream from the suspended pump is greater than the predetermined temperature threshold. Another predefined enabling condition for restarting a pump, also relating to process fluid temperature, can be satisfied when process fluid temperature measured inside the vaporizer that is associated with the suspended pump is above a predetermined temperature. This predetermined temperature is preferably higher than the predetermined threshold temperature, so that restarting the suspended pump introduces warmer process fluid into the conduit downstream from vaporizer. This embodiment of the method requires a temperature sensor associated with each vaporizer to measure process fluid temperature inside the respective vaporizer and to send signals representative of the temperature to the controller for processing.

Yet another predefined enabling condition for restarting a pump that has been suspended can relate to the temperature of the heat exchange fluid. This predefined enabling condition can be satisfied when heat exchange fluid temperature measured at the outlet of the vaporizer that is associated with the suspended pump is above a predetermined temperature. The temperature of the heat exchange fluid can be an indirect indication of the process fluid temperature inside the vaporizer, and like in the embodiment that measures process fluid temperature inside the vaporizer directly, an enabling condition for restarting a suspended pump can be that process fluid temperature inside the vaporizer is greater than the predetermined threshold temperature.

A fluid delivery system is provided that comprises components that cooperate with one another to store a liquefied process fluid and deliver the process fluid in a gaseous phase to an end user. In a preferred embodiment, the fluid delivery system comprises:
a storage vessel for holding the liquefied process fluid at cryogenic temperatures;
a pump with a suction inlet in fluid communication with a cryogen space inside the storage vessel;
a vaporizer with an inlet in fluid communication with a discharge outlet of the pump, the vaporizer comprising a heat exchanger for transferring heat energy from a heat exchange fluid to the process fluid, whereby the heat energy can be employed to convert the liquefied process fluid into the gaseous phase;
a conduit in fluid communication with an outlet of the vaporizer for delivering the process fluid to the end user;
a temperature sensor disposed in the conduit for measuring process fluid temperature and emitting an electronic signal representative of the process fluid temperature;
a pressure sensor disposed in the conduit for measuring process fluid pressure and emitting an electronic signal representative of process fluid pressure; and
a controller in communication with the temperature sensor and the pressure sensor, wherein the controller is programmable to control pump operation responsive to process fluid temperature and pressure, whereby the controller:
   commands the pump to operate when process fluid pressure is below a predetermined low pressure threshold;
   commands the pump to stop when process fluid pressure is above a predetermined high pressure threshold;
   commands the pump to temporarily suspend operation when process fluid temperature is less than a predetermined threshold temperature, with this command to temporarily suspend operation overriding a command to operate the pump based upon process fluid pressure; and
   commands the pump to restart from being suspended from operation if at least one predefined enabling condition is satisfied and process fluid pressure is less than the predetermined high pressure threshold.

The controller can be programmed such that one of the predefined enabling conditions dictates that a temporarily suspended pump be idle for at least a predetermined minimum length of time. In another embodiment, the controller can be programmed to suspend operation of the pump until the process fluid temperature in the conduit is above the predetermined threshold temperature. In another embodiment the system can further comprise a temperature sensor disposed in a process fluid passage inside the vaporizer, from which electronic signals representative of the process fluid temperature can be sent to the controller. In this embodiment, one of the predefined enabling conditions that is programmed into the controller is satisfied when process fluid temperature inside the vaporizer is above a predetermined temperature. In yet another embodiment, the system can further comprise a temperature sensor disposed in or near an outlet conduit for heat exchange fluid exiting the vaporizer. This temperature sensor measures the temperature of the heat exchange fluid and emits electronic signals representative of the measured temperature. In this embodiment, the controller is programmable to keep the pump idle until the heat exchange fluid has a temperature that is above a predetermined temperature. The controller can be programmed to use one or a combination of the described approaches for determining when to restart a pump that has been temporarily suspended from operating.

The disclosed fluid delivery system preferably further comprises an accumulator vessel for holding pressurized gas downstream from the vaporizer and upstream from the end user. An accumulator vessel helps to ensure a sufficient supply of pressurized gas especially when the rate at which gas is consumable by the end user is variable, and when the availability of the pump to be operated is dependent upon factors such as process fluid temperature downstream from the vaporizer, process fluid flow rate, and heat exchange fluid temperature.

The fluid delivery system preferably further comprises a pressure regulator associated with the conduit for regulating gas pressure before it is delivered to the end user. For some systems a pressure regulator is not needed because the delivery pressure during system operation is not important. For example, a system that is used to fill pressure vessels with high pressure gas does not need a regulator, since the system is operated until the pressure vessel is filled; pressure increases as the pressure vessel is filled, and the system is stopped when the pressure in the pressure vessel reaches the desired pressure. However, in other systems, such as a fuel delivery system for an internal combustion engine, a pressure regulator is needed because the pressure of the gas that is delivered to the end user is important for controlling the amount of fuel that is delivered to the engine.

In a preferred embodiment of the fluid delivery system the end user is an internal combustion engine, and the process fluid is a combustible fuel, with the conduit delivering the fuel to a fuel injection valve. In a preferred embodiment the fuel injection valve has a nozzle disposed in a combustion chamber of the engine whereby the fuel is introducible directly into a combustion chamber of the engine. In this preferred embodiment, the engine can be the primer mover for a vehicle. The heat exchange fluid can be engine coolant and the system can further comprise piping connecting a cooling jacket of the engine to a heat exchange fluid inlet of the vaporizer.

In a preferred embodiment of the fluid delivery system the pump is disposed within the cryogen space of the storage vessel. This helps to keep the pump chamber at cryogenic temperatures so that there is no need to cool down the pump when starting up the system.

The storage vessel, the pump, and the vaporizer can each be one of a plurality of like components arranged in parallel, with each one of the vaporizers comprising an outlet in communication with the conduit for delivering process fluid to the end user. In this embodiment, the controller can be programmed to start one of the plurality of pumps that is idle when operation of another one of the pumps is temporarily suspended if at least one predefined enabling condition is satisfied and process fluid pressure is less than the predetermined high pressure threshold. Each one of the vaporizer outlets can be associated with a respective temperature sensor for measuring process fluid temperature inbetween each one of the vaporizer outlets and respective one-way valves upstream from the conduit.

As disclosed in describing the method, and as with a single pump system, a multi-pump fluid delivery system can further comprise additional temperature sensors associated with each of the vaporizers to assist with determining when to restart a pump that has been suspended. For example, the system can further comprise a temperature sensor for each vaporizer that measures process fluid temperature inside the vaporizers, and the controller can be programmed to enable operation of a pump that has been suspended if process fluid temperature inside a respective vaporizer is above a predetermined value. In another embodiment, the system can further comprise a temperature sensor for each vaporizer that measures heat exchange fluid temperature near a heat exchange fluid outlet, and the controller can be programmed to enable operation of a pump that has been suspended if heat exchange fluid temperature for a respective vaporizer is above a predetermined value.

### Brief Description of the Drawings

Figure 1 is a schematic diagram of a fuel delivery system for an internal combustion engine, with a pump disposed inside a cryogenic storage vessel, an external vaporizer, an accumulator vessel, a fuel injection valve, and an electronic controller.
Figure 2 is a schematic diagram of a fuel delivery system like that of Figure 1 but with this embodiment having two cryogenic storage vessels, each with a pump disposed in their respective cryogen spaces, and a vaporizer integrated with each pump assembly.
Figure 3 is a section view of a vaporizer that can be integrated with a pump assembly.
Figure 4 is a flow diagram that illustrates a control strategy for controlling the operation of the delivery system of Figure 1.
Figure 5 is a flow diagram that illustrates the same control strategy as that of Figure 4, but with some additional steps.
Figure 6 is a flow diagram that illustrates a control strategy for controlling the operation of the delivery system of Figure 2.
Figure 7 is a flow diagram that illustrates another embodiment of a control strategy for the delivery system of Figure 2.
Figure 8 is a graph of fuel temperature at the discharge from the vaporizer and the pump piston linear displacement for a system with two pumps and two vaporizers, such as the system depicted in Figure 2. Both temperature and linear displacement are plotted against the same time scale.

### Detailed Description of Preferred Embodiment(s)

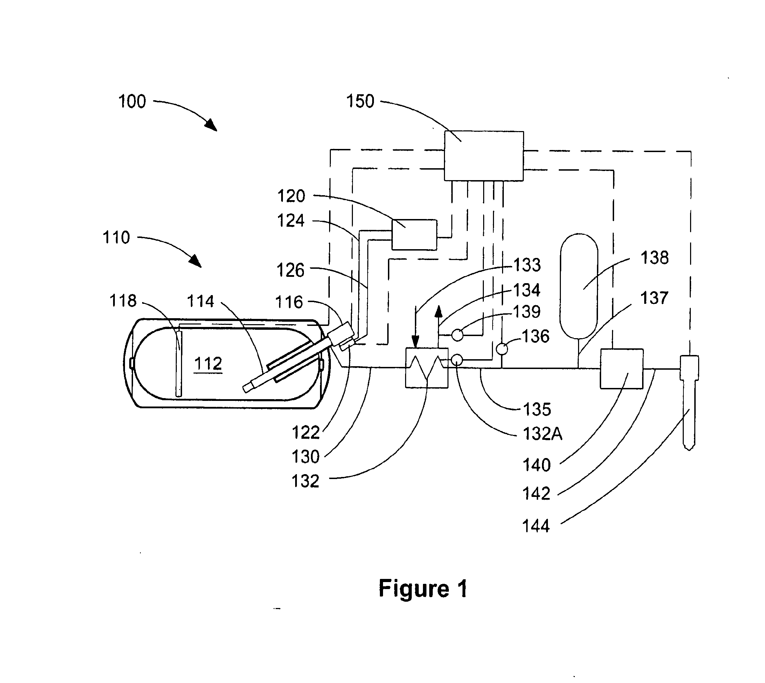

Figure 1 is a schematic view of a preferred application for liquefied gas supply system 100, wherein system 100 is employed to supply gaseous fuel to an internal combustion engine. That is, the process fluid in this application is a combustible fuel. By way of example, the method and system apparatus is described herein as it relates to this particular application. However, persons skilled in the technology will understand that this invention is also suitable for other applications where a process fluid is stored in the liquid phase at cryogenic temperatures and it is necessary to vaporize the process fluid and deliver it to an end user that uses the process fluid in the gaseous phase and at a significantly higher temperature. The disclosed system and method are particularly useful for applications where there are variable operating conditions, such as, for example, applications in which process fluid flow rate varies over a wide range and/or applications in which the temperature of the heat exchange fluid in the vaporizer varies thereby affecting the heat transfer rate from the heat exchange fluid to the process fluid.

Cryogenic storage vessel 110 comprises a double-walled vacuum insulated cryogen space 112, pump 114, which is shown disposed within cryogen space 112, drive unit 116, and level sensor 118. In other embodiments, pump 114 can be disposed outside cryogen space 112 and connected thereto by an insulated suction pipe. Pump 114 can be designed to supply gaseous fuel to the engine at high pressures (above 14 MPa) and at temperatures above zero degrees Celsius. Accordingly, because the disclosed system is capable of supplying a gas at such high pressures, the illustrated liquefied gas supply system 100 is particularly suitable for supplying gaseous fuel to a direct injection engine, in which the gaseous fuel is injected directly into the combustion chamber, since the gaseous fuel pressure in such systems must be higher than the in-cylinder pressure, and fuel temperature must not be so low as to undesirably cool the combustion chamber.

In the illustrated embodiment, drive unit 116 is hydraulically driven. Hydraulic pump 120 supplies high pressure hydraulic fluid to flow switching device 122 through pressure line 124, and hydraulic fluid is returned to a hydraulic fluid reservoir or directly back to the hydraulic circuit through return line 126. Flow switching device 122 comprises valves for switching fluid connections to opposite ends of the hydraulic cylinder between pressure line 124 and return line 126 to cause reciprocating movement of a hydraulic piston disposed within the hydraulic cylinder. Other types of variable speed drive units can be employed. For example, instead of a hydraulic drive unit, the drive unit could be pneumatic, electric, electromagnetic, or another type of linear motor, or a rotary drive unit with a transmission device, such as crank and rod arrangement, for converting rotary motion into linear motion.

Cryogenic fluid pumped from storage vessel 110 is discharged through conduit 130 and flows into vaporizer 132. Vaporizer 132 is operable to raise the temperature of the fluid and shift it into the gaseous phase, so that a high pressure gas exits vaporizer 132 and flows to fuel conditioning module 140 through conduit 135. Vaporizer 132 is typically a heat exchanger designed to vaporize the cryogenic fluid by transferring heat energy to the cryogenic fluid from a warmer heat exchange fluid that is supplied through conduit 133. In the described example of the fuel delivery system for an engine, the warmer heat exchange fluid can be the engine coolant that is directed to conduit 133 from the engine's cooling jacket. In a typical engine the coolant exits the engine's cooling jacket with a temperature of between 80 and 95 degrees Celsius when the engine is operating under normal conditions. The engine coolant exits vaporizer 132 through conduit 134 and can be returned to a reservoir from which it can be recirculated through the engine's cooling system. Engine coolant temperature can vary depending upon many factors such as ambient air temperature, vehicle speed, and how long the engine has been running. If all other variables remain constant, cooler engine coolant temperatures result in a cooler fuel stream exiting vaporizer 132. An objective of the present invention is to prevent the temperature of the process fluid from dropping below a predetermined value.

The disclosed apparatus comprises temperature sensor 136 that measures the temperature of the gas that exits from vaporizer 132 in conduit 135. The instrumentation can optionally also include temperature sensor 132A that measures the temperature of the process fluid inside and near the outlet of vaporizer 132 and temperature sensor 139 that measures the temperature of the heat exchange fluid that exits vaporizer 132. The temperatures measured by sensor 136 and/or sensor 132A and/or sensor 139 can be relayed to controller 150, which processes that information as described below when the method is discussed.

Figure 1 shows accumulator vessel 138 as a component of system 100. Accumulator vessel 138 provides a store of high-pressure gas, which, once filled, helps to reduce fluctuations in gas pressure by ensuring an adequate supply of gas at the desired pressure. The gas pressure in the accumulator can be higher than the gas pressure needed by the end user, so that a pressure regulating valve is employed to reduce gas pressure before it is delivered to the end user. The pressure regulating valve can be part of fuel conditioning module 140. Branch conduit 137 fluidly connects conduit 135 to accumulator vessel 138. The accumulator can be a vessel as shown in Figure 1, but the accumulator can also be in the form of an inline vessel or coil, or conduit 134 itself can be sized with a diameter that provides an adequate storage volume to act as an accumulator. The larger the volume of the accumulator, the easier it is to maintain a steady gas pressure, but in the case of mobile applications, such as a fuel supply system for a vehicle engine, there are limitations on the practical size of the accumulator. Nevertheless, with the presently disclosed apparatus and method, an accumulator in some form is desirable to ensure there is an adequate supply of high-pressure gas.

Fuel conditioning module 140 can perform a number of functions. As discussed in the previous paragraph, one of the main functions of fuel conditioning module 140 can be to control the pressure of the fuel in conduit 142, which supplies fuel gas to fuel injection valve 144. Fuel conditioning module 140 can comprise pressure sensors for measuring the gas pressure in conduit 135 and/or conduit 142, a filter for separating solid contaminants, and/or safety devices such as a pressure relief valve for preventing over-pressurization of fuel conduit 142 and/or to reduce the fuel pressure in fuel conduit 142 when the engine is shut down. The components of fuel conditioning module 140 are preferably integrated to reduce the number of connections where leaks can develop, to reduce the size, and to reduce the labor needed to assemble this module.

Even with integration of the individual components that make up fuel conditioning module 140, there are a number of seals and moving parts in fuel conditioning module 140 that can be permanently damaged or otherwise suffer from a reduction in their lifecycle if exposed to temperatures below their prescribed operating range. Further damage or temporary inoperability can result if components downstream from vaporizer 132 are allowed to freeze up. For example if the temperature of the fuel flowing from vaporizer 132 is below zero degrees Celsius, moisture in the air can freeze on the components downstream from vaporizer 132 resulting in a build up of ice that can inhibit the operation of the fuel delivery system.

Controller 150 can be part of the engine controller or a separate controller that works in cooperation with the engine controller. In a preferred embodiment, controller 150 is an electronic control module that receives input signals representative of operational parameters, processes such input signals, and emits control signals to control the operation of the fuel delivery system. Responsive to the processed input signals, controller 150 is programmed to send predetermined control signals to hydraulic pump 120, flow switching device 122, and fuel conditioning module 140. When controller 150 is integrated with the engine controller it also sends control signals to fuel injection valve 144. In Figure 1, dashed lines illustrate paths for signals flowing to and from controller 150. Each line can represent a plurality of signal wires if more than one input or control signal is transmitted between controller 150 and a given fuel system component.

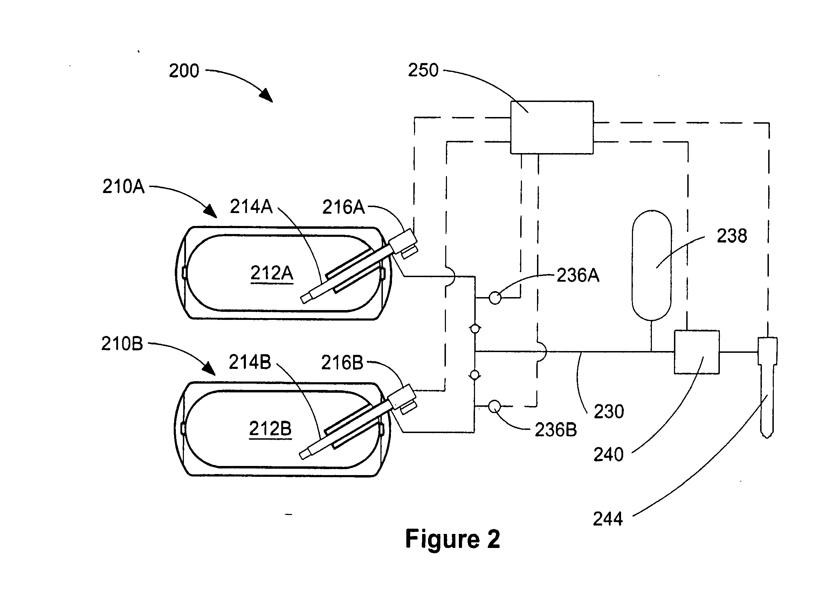

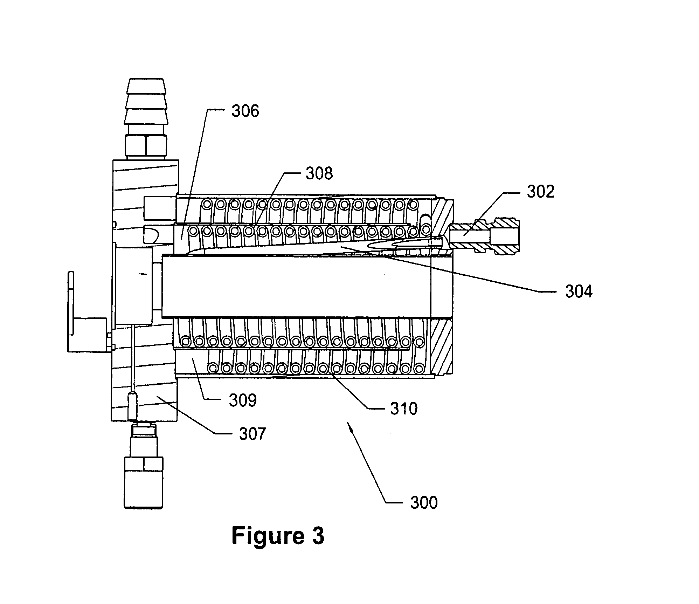

Figure 2 is an illustration of another embodiment of a fuel delivery system for a gaseous-fuelled internal combustion engine. Fuel delivery system 200 is similar to the embodiment of Figure 1 with some exceptions, as noted below. In the embodiment of Figure 2 there are a plurality of cryogenic storage vessels. Two storage vessels are shown, namely 210A and 210B, but as will be appreciated by persons skilled in the technology, any number of storage vessels can be employed by the presently disclosed invention. Each storage vessel defines its own cryogen space 212A and 212B, respectively, with each served by its own respective pump 214A, 214B. Separate drive units 216A and 216B allows can allow independent operation of respective pumps 214A and 214B. In the embodiment of Figure 2, the vaporizers are integrated into the pump assembly as described with respect to Figure 3. Accordingly high-pressure gas exits straight from the pump assemblies into conduit 230. Temperature sensors 236A and 236B measure the temperature of the process fluid exiting from respective pumps 214A and 214B. The temperature sensors send signals representative of the measured temperature to controller 250.

In the embodiment of Figure 2, accumulator vessel 238, fuel conditioning module 240 and fuel injection valve 244 function in the same way as accumulator vessel 138, fuel conditioning module 140 and fuel injection valve 144 that have all been described in relation to the embodiment of Figure 1.

Figure 3 is an illustration of a vaporizer that can be made integral to the pump assembly as described with respect to the embodiment of Figure 2. A combined pump and vaporizer arrangement is disclosed in co-owned Canadian patent no. 2,362,881, entitled, "Method and Apparatus For Delivering Pressurized Gas". With reference to Figure 3, a heater that can act as vaporizer 300 can be disposed in the annular space that surrounds the pump drive shaft, with this space being insulated from the cryogen space and the cold end where the pump chamber is located. The process fluid pumped from the cryogenic storage vessel enters the vaporizer through inlet coupling 302 from which it is introduced into introduction tube 304. Upon entering inlet coupling 302, the fluid can still be at a cryogenic temperature that is lower than the freezing temperature of the heat exchange fluid. To reduce the likelihood of freezing the heat exchange fluid, heater introduction tube 304 preferably directs the pressurized fluid to a location proximate to where the heat exchange fluid is first introduced into the heater. In the illustrated embodiment, heat exchange fluid is first introduced into inner heat bath channel 306 near drive head flange 307. Accordingly, the coldest part of inner coil 308 is exposed to the warmest part of the heat bath.

The heat exchange fluid flows through inner channel 306 and outer channel 309 in the same general direction as the pressurized fluid flowing through inner tubular coil 308 and then outer tubular coil 310. Depending on the operating conditions for the particular application for which the apparatus is employed, and, in particular, the temperature of the pressurized fluid and the temperature of the heat exchange fluid, the length of the pressurized fluid coil within the heat bath is determined so that the pressurized fluid exits vaporizer 300 as a gas that has been heated to a temperature within a pre-determined temperature range.

As already described above in discussing the application of the disclosed system to deliver fuel to an engine, when the system is employed for this application, the engine coolant is an example of a suitable and convenient heat exchange fluid that can be delivered to the vaporizer. In such an embodiment, engine coolant that has been heated after passing through the cooling jacket of the engine can be delivered to the heat bath in vaporizer 300 where it is cooled prior to being returned to the engine cooling system. In the described system, the quantity of engine coolant that is diverted to the vaporizer can be only a relatively small portion of the total engine coolant flow, such that there is not a significant change to the overall heat balance within the engine cooling system compared to a conventional engine cooling system that does not divert any engine coolant to a vaporizer.

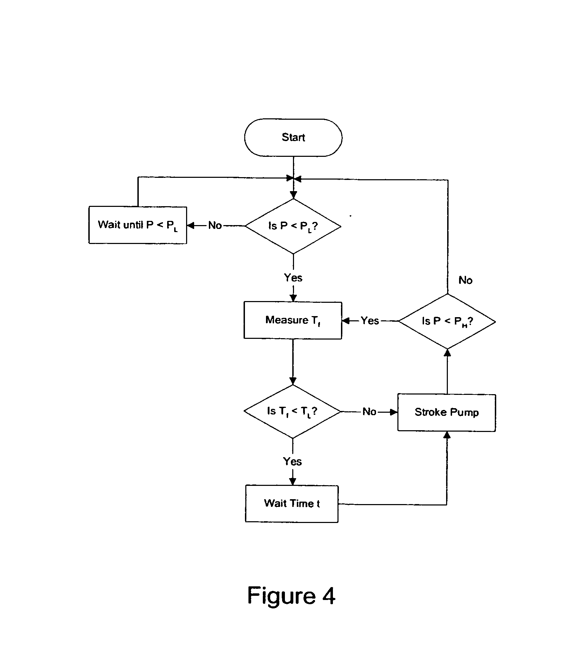

Figure 4 illustrates a method that can be used to operate the system of Figure 1 and in the description of this method, component reference numbers refer to the components illustrated in Figure 1. The method starts with a pressure sensor measuring process fluid pressure downstream from vaporizer 132. As described with reference to Figure 1, the pressure sensor can be a part of fuel conditioning module 140. The measured pressure is monitored by controller 150 and if process fluid pressure P is less than predetermined low pressure threshold P_{L} the controller takes this as an overall request to start the pump. At the same time, controller 150 monitors the measurements from temperature sensor 136, which indicates the temperature of the process fluid downstream from vaporizer 132. If controller 150 determines that T_{f} is not less than threshold temperature T_{L}, then controller 150 commands pump 114 to stroke to thereby raise the process fluid pressure. If controller 150 determines that T_{f} is less than T_{L}, then controller 150 imposes a predetermined wait time t before commanding pump 114 to stroke. The imposed wait time allows more residency time for the process fluid in vaporizer 132, allowing more time for it to be heated. In another embodiment, instead of imposing a predetermined wait time, controller 150 can be programmed to suspend operation of pump 114 until T_{f} is greater than T_{L}. After pump 114 is stroked, controller 150 determines if process fluid pressure P is less than predetermined high pressure threshold P_{H}. An objective of this aspect of the method is to maintain process fluid pressure between low pressure threshold pressure P_{L} and high pressure threshold pressure P_{H}. If controller 150 determines that process fluid pressure P is less than high pressure threshold pressure P_{H} then controller 150 again considers whether T_{f} is less than threshold temperature T_{L}, before commanding another pump stroke. If T_{f} is less than T_{L} the pump may be temporarily suspended from operating before process fluid pressure is raised up to P_{H}, so that process fluid pressure cycles between P_{L} and an intermediate pressure between P_{L} and P_{H} until T_{f} remains higher than T_{L} for the number of pump strokes that is needed to raise process fluid pressure to P_{H}. When controller 150 determines that process fluid pressure P is not less than P_{H}, then controller 150 returns to the start and waits until process fluid pressure P is less than P_{L}.

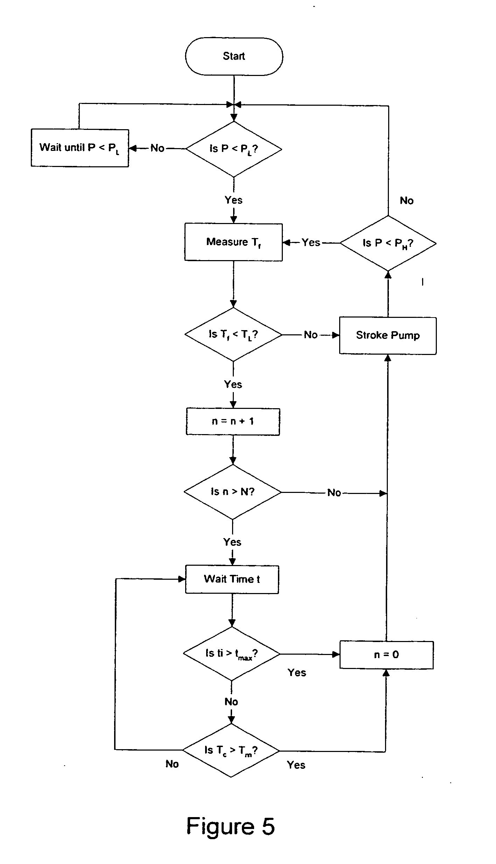

Figure 5 illustrates another method of operating the system of Figure 1. The method of Figure 5 includes all of the steps of the method of Figure 4, but with some additional steps. After controller 150 determines that T_{f} is less than T_{L}, controller 150 uses a counter to calculate n = n + 1. Controller 150 considers whether n is greater than a predetermined number N as a further condition to determining if it will temporarily suspend operation of pump 114. Using a counter in this manner helps controller 150 to filter out false temperature readings, so that pump 114 is only suspended from operating if process fluid temperature T_{f} is lower than T_{L} for N consecutive pump cycles. If a counter is used, because the pump is permitted to operate for N consecutive pump cycles with T_{f} being less than T_{L}, to anticipate process fluid temperature T_{f} dropping below threshold temperature T_{L}, the value for T_{L} can be set higher than if a counter is not used.

After controller 150 determines that n is greater than N, controller 150 can impose a predetermined wait time before resetting n to zero and then commanding the pump to stroke, or as shown in Figure 5, the method can optionally further comprise other additional steps , which relate to considering the temperature of the heat exchange fluid or the process fluid inside the vaporizer. The temperature of the heat exchange fluid can be measured by temperature sensor 139 and/or the process fluid temperature inside vaporizer 132 can be measured by temperature sensor 132A. Referring to Figure 5, with this feature, controller 150 imposes a delay to resetting n to zero and stroking pump 114 until the wait time is greater than a predetermined maximum wait time tₘₐₓ, or until heat exchange fluid temperature Tc is greater than a predetermined minimum temperature Tₘ. If temperature T_{c} is not greater than Tₘ, and the wait time is less than tₘₐₓ, controller 150 continues to suspend operation of pump 114. If the controller determines that T_{c} is greater than Tₘ, before total wait time is greater than tₘₐₓ, controller 150 can immediately reset the counter to zero and controller 150 can then command pump 114 to stroke if needed to raise process fluid pressure P and maintain it within the range between P_{L} and P_{H}. Instead of monitoring the temperature of the heat exchange fluid, the same steps can be applied with process fluid temperature inside vaporizer 132 measured by sensor 132A instead of heat exchange fluid temperature measured by sensor 139, whereby pump 114 is not enabled until the temperature measured by sensor 132A is higher than a predetermined value.

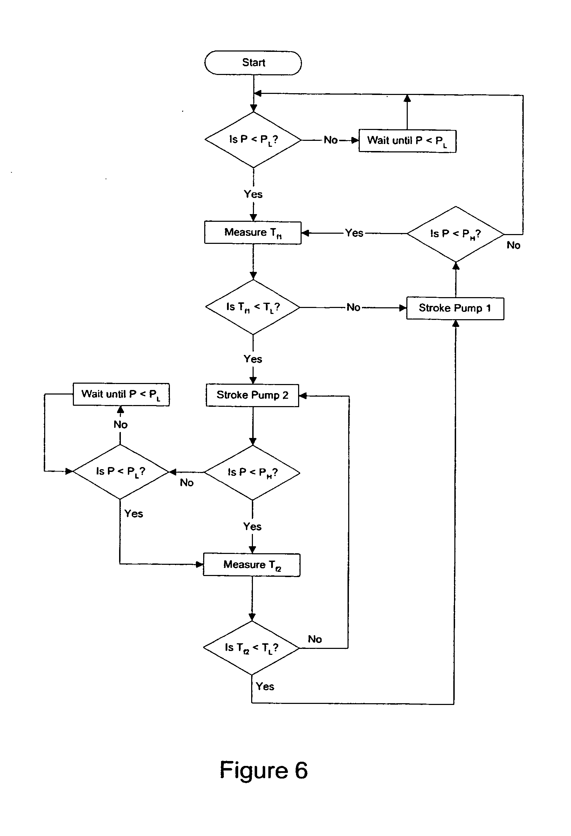

Figure 6 illustrates a method that can be used to operate the system of Figure 2, which has a parallel arrangement for storage vessels 210A, 210B, pumps 214A, 214B with parallel vaporizers integrated with the pump assemblies. The method is the same as the methods of Figures 4 and 5 in that the pumps are temporarily suspended from operating when the process fluid temperature T_{f} drops below a predetermined threshold temperature T_{L}, but with the parallel arrangement, when one pump is suspended from operating it is possible to switch to the other pump.

Like the methods of Figures 4 and 5, the method of Figure 6 begins with controller 250 determining if there is a need to increase process fluid pressure by checking if process fluid pressure P is less than predetermined low pressure threshold P_{L}. If process fluid pressure P is not less than predetermined low pressure threshold P_{L}, then controller 250 waits until process fluid pressure P does indeed drop below predetermined low pressure threshold P_{L} before checking temperature T_{f1} which is measured by temperature sensor 236A downstream from pump 214A and its integral vaporizer. If process fluid pressure P is less than P_{L}, and controller 250 determines that T_{f1} is not less than threshold temperature T_{L} then controller 250 commands pump 214A (pump 1) to stroke. After stroking pump 214A, if controller 250 determines that process fluid pressure P is less than predetermined high pressure threshold P_{H}, then controller 250 again considers whether T_{f1} is less than T_{L} before commanding another stroke of pump 214A. If P is not less than P_{H}, then controller 250 waits until P is less than P_{L} before repeating the process of determining whether to command another stroke of pump 214A or to switch to pump 214B (pump 2).

When process fluid pressure P is less than P_{L} and T_{f1} is less than T_{L}, then controller 250 leaves pump 214A idle and commands pump 214B to stroke. The process for operating pump 214B is the same as the process for operating pump 214A except that after stroking pump 214B and controller 250 checks whether process fluid pressure P is less than P_{H}, controller 250 checks process fluid temperature T_{f2} (not T_{f1}) before determining which pump to stroke, where process fluid temperature T_{f2} is measured by temperature sensor 236B downstream from pump 214B. That is, if P is less than P_{H}, pump 214B is commanded to take another stroke if T_{f2} is not less than T_{L}. If T_{f2} is less than T_{L}, then controller 250 commands pump 214A to stroke. If, after stroking pump 214B process fluid pressure P is not less than P_{H}, then controller 250 waits until P is less than P_{L} before again considering whether to command another stoke of pump 214B or to shift to pump 214A if T_{f2} is less than T_{L}. With this embodiment the minimum time that each of the pumps is idle is the time that it takes for the other pump to complete an extension and retraction stroke. The idle time for each pump can be longer than this minimum time and typically is longer depending upon a number of system characteristics such as the flow capacity of the pumps relative to the normal consumption rates by the end user, the size of the accumulator volume, and the efficiency of the vaporizer. Longer idle times for one pump can be achieved, for example, if the other pump is stroked for a plurality of consecutive strokes, or if the other pump raises process fluid pressure P to P_{H} and there is no need to stroke either pump until P is less than P_{L}.

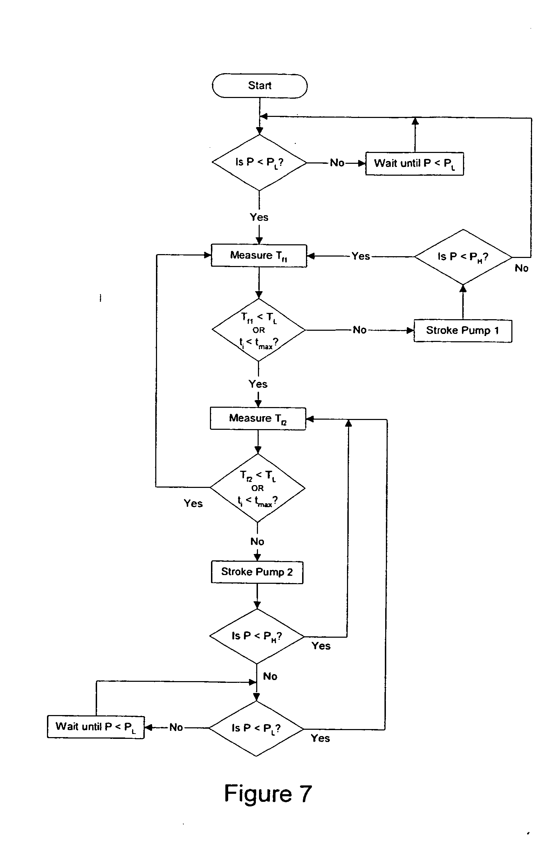

Figure 7 illustrates another embodiment of a method of controlling the system of Figure 2. Similar to both methods, the controller can determine from the process fluid temperature when to switch from one pump to the other pump. However, with this method, a pump can be enabled to stroke even if the measured process fluid temperature is less than T_{L}, if idle time ti for that pump is not less than predetermined maximum time tₘₐₓ. Another difference between the method of Figure 7 and the method of Figure 6 is that, in the method of Figure 7, when controller 250 determines that one pump should be idle, before commanding the other pump to stroke controller 250 considers whether the process fluid temperature associated with the other pump is less than T_{L} or if the idle time ti for the other pump is less than tₘₐₓ. If both T_{f1} and T_{f2} are less than T_{L} and tᵢ for both pumps is less than tₘₐₓ, this can result in a condition where both pump 214A and pump 214B are idle until one of T_{f1} or T_{f2} rises above T_{L} or tᵢ for one of the pumps is greater than tₘₐₓ. Because T_{f1} and T_{f2} are measured by respective sensors 136A and 136B which are downstream from the vaporizers, when both pumps are idle the process fluid temperature measured by the temperature sensors may not reflect the temperature of the process fluid within the vaporizers, since this fluid continues to be warmed by the heat exchange fluid and there is virtually no mass flow through conduit 230. Accordingly, the temperature of the process fluid in the vaporizer can be higher than the downstream temperature of the process fluid near temperature sensors 136A and 136B and this condition can continue for a long time with T_{f1} and T_{f2} being less than T_{L} since heat is primarily transferred to the process fluid near the sensors by conduction and not by convection (i.e. fluid flow). Accordingly, with the method of Figure 7, to overcome this condition, this method further comprises setting a predetermined maximum idle time tₘₐₓ, whereby if both T_{f1} and T_{f2} are less than T_{L}, after one of the pumps has been idle for at least the maximum idle time, that pump can be allowed to stroke, even if both T_{f1} and T_{f2} remain less than T_{L}. In other embodiments, additional temperature sensors can be employed, similar to those shown in Figure 1 to measure heat exchange fluid temperature or process fluid temperature within the vaporizer, whereby one of the pumps can be allowed to stroke if heat exchange fluid temperature or process fluid temperature within the vaporizer is above a predetermined value. The controller can be programmed to consider the temperature of the heat exchange fluid or the process fluid inside the vaporizer in lieu of the maximum idle time control strategy or in combination, whereby a pump can be allowed to stroke even if the downstream process fluid temperature is less than T_{L} and idle time tᵢ is less than tₘₐₓ, if one of heat exchange fluid temperature or process fluid temperature inside the respective vaporizer is above a predetermined value.

In the methods just described with reference to Figures 6 and 7, two temperature sensors (236A and 236B) are employed to measure process fluid temperature downstream from respective pump/vaporizer assemblies 214A and 214B. As shown in the arrangement depicted in Figure 2, temperature sensors 236A and 236B are positioned in the conduits between the respective vaporizers and check valves that prevent backflow when a pump is idle and the other pump is operating. However, in another embodiment, it is possible to use only one temperature sensor positioned downstream from the check valves. In this embodiment a single temperature sensor can be employed to monitor when process fluid pressure temperature T_{f} is below predetermined low temperature threshold T_{L}. In this embodiment the method is the same as those set out in Figures 6 and 7, except that T_{f} replaces T_{f1} and T_{f2}.

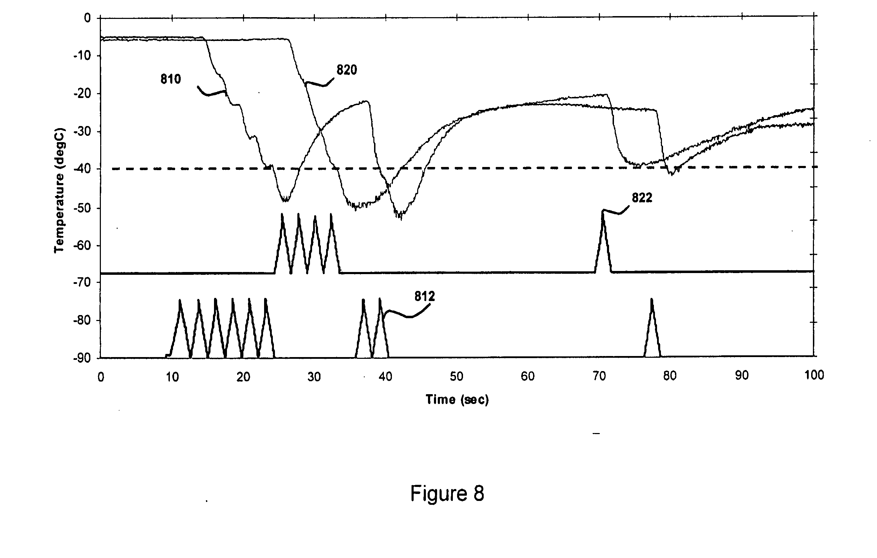

Figure 8 is a graph that further illustrates a method such as one of those illustrated by Figure 6 or Figure 7 applied to a two-pump system such as that of Figure 2. Figure 8 is a plot of process fluid temperate against time. Superimposed on the same graph, Figure 8 also plots, pump piston displacement against the same time scale. The vertical axis is process fluid temperature measured in degrees Celsius at the outlet of the vaporizer, and the horizontal axis is time measured in seconds. In this example, the threshold temperature T_{L} is minus 40 degrees Celsius, and this is marked in Figure 8 by a horizontal dashed line. This graph illustrates a start-up mode, when process fluid pressure is below the desired pressure and several consecutive pump strokes are needed to pressurize the system. As already noted in this disclosure, this is a challenging operating condition because when the heat exchange fluid is engine coolant, if the temperature of the engine block is initially cold, the engine coolant temperature can be much colder than normal operating conditions.

At time zero, the temperature downstream from both pumps is about minus 5 degrees Celsius. The process fluid temperature at the respective outlets of the vaporizers associated with pumps 214A and 214B are represented by lines 810 and 820 respectively. Since this temperature is initially much higher than threshold temperature T_{L} for both pumps, and since at start up, process fluid pressure P is typically less than P_{L}, first pump 214A is commanded to start, as indicated at the ten second mark by line 812. The peaks of lines 812 represent when the pump piston is fully extended and the baseline indicates when the piston is fully retracted. Line 812 shows that first pump 214A is operated for six consecutive pump strokes until, as indicated by line 810, the temperature downstream from pump 214A drops to below threshold temperature T_{L}. Then controller 250 commands pump 214A to temporarily suspend operation, thereby increasing residency time in the associated vaporizer, which results in an increase in the process fluid temperature. In this example, process fluid pressure is still below the desired system pressure, and since process fluid temperature downstream from second pump 214B, as indicated by line 820, is higher than threshold temperature T_{L}, controller 250 commands second pump 214B to stroke, as indicated by line 822. Like line 812, peaks in line 822 correspond to when the pump piston is fully extended and the baseline corresponds to when the pump piston is fully retracted. Initially, the temperature downstream from second pump 214B is at about minus 5 degrees Celsius, but after four piston strokes, as shown by line 820, process fluid temperature downstream from second pump 214B drops below threshold temperature T_{L}, and controller 250 commands second pump 214B to temporarily suspend operation. After second pump 214B is suspended, process fluid temperature downstream from second pump 214B begins to rise. Meanwhile, in the time that first pump 214A has been suspended, line 810 shows that process fluid temperature downstream from first pump 214A has risen above T_{L}, enabling first pump 214A to be ready to be restarted when needed. As shown in this example, when pump 214B is suspended, at about the 35 second mark, controller 250 commands first pump 214A to restart and stroke again. After the second stroke it is commanded to suspend operation because process fluid temperature downstream from first pump 214A is again below the threshold temperature T_{L}. However, by this time the system pressure has exceeded high pressure set point P_{H} and another piston stroke is not commanded until around the 70 second mark when process fluid pressure drops to the predetermined low pressure threshold P_{L}. Because first pump 214A was last suspended because process fluid temperature downstream from it was below T_{L}, when system pressure drops below the predetermined low pressure threshold, controller 250 commands second pump 214B to operate at around the 77 second mark. At this point, system pressure is within the desired operating range and less frequent pump strokes are required to maintain system pressure, allowing more residency time for the process fluid in the vaporizers. As well, after the engine has reached its normal operating temperature, the engine coolant is warmer, and that also helps to keep process fluid temperature above threshold temperature T_{L}.

Figure 8 illustrates an extreme operating condition, namely start-up when continuous pumping is initially required to raise system pressure. Figure 8 also shows that once the system is pressurized, intermittent operation of the pumps can be sufficient to maintain system pressure. These wide ranging conditions highlight the importance of sizing the output capacity of the pumps, the size of the vaporizer, and the size of the accumulator volume, for improved system operability.

A large accumulator volume can reduce the frequency of operating the pump, allowing more residency time of the process fluid in the vaporizer. However, if the accumulator volume is excessively large, it can be difficult at start up to pressurize the system. Under normal operating conditions, the pump is stroked when system pressure drops to low pressure threshold P_{L} and as long as process fluid temperature remains above threshold temperature T_{L} the pump can be commanded to stroke until system pressure reaches a predetermined high pressure set point, thereby maintaining system pressure between a predetermined high pressure set point and a predetermined low pressure threshold. However, at times such as start up, if process fluid temperature drops below threshold temperature T_{L} and the pump can be temporarily suspended before system pressure reaches the high pressure set point, system pressure can fluctuate between the predetermined low pressure threshold and an intermediate system pressure.

Figures 4 through 7 are provided to help illustrate different embodiments of the method, with some embodiments comprising additional steps for controlling the operation of the pump(s). Persons skilled in implementation of control strategies will understand that the steps need not follow the depicted order to achieve the same results, and that steps need not be performed in a sequential manner. That is, a controller can be programmed to monitor, in parallel, several parameters such as, for example, process fluid temperature, process fluid pressure, heat exchange fluid temperature, how long a pump has been idle, and how many consecutive pump strokes have been made with process fluid temperature below a threshold temperature. Each parameter can be determinative of whether or not the pump is ready to be stroked. In a system with two pumps based upon the parameters that the controller is programmed to monitor, both pumps can be enabled for operation, or one of the pumps, or none of the pumps. When the controller determines that it is necessary to increase process fluid pressure, if both pumps are enabled, to determine which pump to operate, the controller can choose a pump based upon other criteria such as respective pump performance, fluid level in the respective storage vessels, and which pump has been idle longer.

While particular elements, embodiments and applications of the present invention have been shown and described, it will be understood, that the invention is not limited thereto since modifications can be made by those skilled in the art without departing from the scope of the present disclosure, particularly in light of the foregoing teachings.

## Claims

1. A method of pumping a process fluid from a cryogenic storage vessel (110, 210A, 210B) and delivering said process fluid to an end user in a gaseous phase, said method comprising:
starting a pump (114, 214A, 214B) and pumping said process fluid from said storage vessel (110, 210A, 210B), thereby pressurizing said process fluid, when process fluid pressure measured downstream from said pump (114, 214A, 214B) is below a predetermined low pressure threshold;
stopping said pump (114, 214A, 214B) when said process fluid pressure is above a predetermined high pressure threshold;
directing said process fluid from said pump (114, 214A, 214B) to a vaporizer (132) and transferring heat from a heat exchange fluid to said process fluid to convert said process fluid from a liquefied form to said gaseous phase;
delivering said process fluid from said vaporizer (132) to said end user;
**characterized in**
**that** the method further comprises:
measuring process fluid temperature after said process fluid exits said vaporizer (132) and temporarily suspending operation of said pump (114, 214A, 214B) when:
(i) said process fluid temperature is below a predetermined threshold temperature; or
(ii) said process fluid temperature is below a predetermined threshold temperature for a predetermined number of consecutive pump cycles; and restarting said pump (114, 214A, 214B) that has been suspended if at least one predefined enabling condition is satisfied and process fluid pressure is less than said predetermined high pressure threshold.

2. The method of claim 1 wherein said pump (114, 214A, 214B) is temporarily suspended when said process fluid temperature is below said predetermined threshold temperature for said predetermined number of consecutive pump cycles.

3. The method of claim 1 or 2 wherein one of said predefined enabling conditions is satisfied when:
(i) said pump (114, 214A, 214B) has been suspended for a predetermined minimum length of time; and/or
(ii) said process fluid has a temperature downstream from said vaporizer (132) that is higher than said predetermined threshold temperature; and/or
(iii) said heat exchange fluid has a temperature measured downstream from said vaporizer (132) that is above a predetermined temperature; and/or
(iv) said process fluid has a temperature inside said vaporizer (132) that is above a predetermined temperature.

4. The method of any preceding claim wherein said process fluid is a fuel and said method further comprises delivering said fuel to a combustion chamber of an internal combustion engine.

5. The method of claim 4 further comprising injecting at least some of said fuel through a fuel injection valve (144, 244) directly into said combustion chamber.

6. The method of claim 4 or 5 wherein said heat exchange fluid is engine coolant and said method further comprises directing said engine coolant from an engine cooling system to said vaporizer (132).

7. The method of claim 6 further comprising directing said engine coolant to said vaporizer (132) from an outlet of a cooling jacket for said engine.

8. The method of any preceding claim wherein said storage vessel (110, 210A, 210B) is a first one of two storage vessels (110, 210A, 210B), said pump (114, 214A, 214B) is a first one of two pumps (114, 214A, 214B), and said vaporizer (132) is a first one of two vaporizers (132), and said method, further comprises:
starting a second pump (114, 214A, 214B) and pumping said process fluid from a second storage vessel (110, 210A, 210B), thereby pressurizing said process fluid, when operation of said first pump (114, 214A, 214B) is temporarily suspended, at least one predefined enabling condition for said second pump (114, 214A, 214B) is satisfied, and said process fluid pressure downstream from said second pump (114, 214A, 214B) is below said predetermined high pressure threshold;
stopping said second pump (114, 214A, 214B) when said process fluid pressure is greater than said predetermined high pressure threshold;
directing said process fluid from said second pump (114, 214A, 214B) to a second vaporizer (132) and transferring heat from said heat exchange fluid to said process fluid to convert said process fluid from a liquefied form to said gaseous phase;
delivering said process fluid from said second vaporizer (132) to said end user;
measuring process fluid temperature after said process fluid exits said second vaporizer (132) and temporarily suspending operation of said second pump (114, 214A, 214B) when said process fluid temperature downstream from said second vaporizer (132) is below said predetermined threshold temperature;
re-starting said first pump (114, 214A, 214B) if at least one predefined enabling condition for restarting said first pump (114, 214A, 214B) is satisfied, said second pump (114, 214A, 214B) is temporarily suspended and process fluid pressure is less than the predetermined high pressure threshold; and
re-starting said second pump (114, 214A, 214B) if at least one predefined enabling condition for restarting said second pump (114, 214A, 214B) is satisfied, said first pump (114, 214A, 214B) is temporarily suspended and process fluid pressure is less than the predetermined high pressure threshold.

9. The method of claim 8 wherein one of said predefined enabling conditions for restarting one of said first and second pumps (114, 214A, 214B) that has been suspended from operation is satisfied when:
(i) the other pump (114, 214A, 214B) performed the previous pump stroke; and/or
(ii) process fluid temperature measured downstream from said suspended pump (114, 214A, 214B) is greater than said predetermined temperature threshold; and/or
(iii) said suspended pump (114, 214A, 214B) has been idle for a predetermined minimum length of time; and/or
(iv) process fluid temperature measured inside said vaporizer (132) that is associated with said suspended pump (114, 214A, 214B) is above a predetermined temperature; and/or
(v) when heat exchange fluid temperature measured at the outlet of said vaporizer (132) that is associated with said suspended pump (114, 214A, 214B), is above a predetermined temperature.

10. A fluid delivery system comprises components that cooperate with one another to store a liquefied process fluid and deliver said process fluid in a gaseous phase to an end user, said fluid delivery system comprising:
a storage vessel (110, 210A, 210B) for holding said liquefied process fluid at cryogenic temperatures;
a pump (114, 214A, 214B) with a suction inlet in fluid communication with a cryogen space inside said storage vessel (110, 210A, 210B);
a vaporizer (132) with an inlet in fluid communication with a discharge outlet of said pump (114, 214A, 214B), said vaporizer (132) comprising a heat exchanger for transferring heat energy from a heat exchange fluid to said process fluid,
whereby said heat energy can be employable to convert said liquefied process fluid into said gaseous phase;
a conduit (135) in fluid communication with an outlet of said vaporizer (132) for delivering said process fluid to said end user; and
a pressure sensor disposed in said conduit (135) for measuring process fluid pressure and emitting an electronic signal representative of process fluid pressure;
**characterized in**
**that** said fluid delivery system further comprises:
a temperature sensor (136, 236A, 236B) disposed in said conduit for measuring process fluid temperature and emitting an electronic signal representative of said process fluid temperature; and
a controller (150, 250) in communication with said temperature sensor (136, 236, 236B) and said pressure sensor, wherein said controller is programmable to control pump operation responsive to process fluid temperature and pressure, whereby said controller:
is adapted to command said pump (114, 214A, 214B) to operate when process fluid pressure is below a predetermined low pressure threshold;
is adapted to command said pump (114, 214A, 214B) to stop when process fluid pressure is above a predetermined high pressure threshold;
is adapted to command said pump (114, 214A, 214B) to temporarily suspend operation when process fluid temperature is less than a predetermined threshold temperature, with this suspend operation command overriding a command to operate said pump (114, 214A, 214B) based upon process fluid pressure; and
is adapted to command said pump (114, 214A, 214B) to restart from being suspended from operation if at least one predefined enabling condition is satisfied and process fluid pressure is less than the predetermined high pressure threshold.

11. The fluid delivery system of claim 10 wherein one of said predefined enabling conditions is satisfied when:
(i) said pump (114, 214A, 214B) that has been suspended has been idle for at least a predetermined minimum length of time; and/or
(ii) said process fluid temperature in said conduit (135) is above said predetermined threshold temperature.

12. The fluid delivery system of claim 10 further comprising a temperature sensor (132A, 139) disposed in:
(i) an outlet conduit for heat exchange fluid exiting said vaporizer (132) from which electronic signals representative of the temperature of said heat exchange fluid can be sendable to said controller (150, 250), and wherein one of said predefined enabling conditions is satisfied when said heat exchange fluid has a temperature that is above a predetermined temperature; or
(ii) a process fluid passage inside said vaporizer (132) from which electronic signals representative of the process fluid can be sendable to said controller (150, 250), and wherein one of said predefined enabling conditions is satisfied when process fluid temperature inside said vaporizer (132) is above a predetermined temperature.

13. The fluid delivery system of any one of claims 10 to 12 further comprising:
(i) an accumulator vessel (138, 238) for holding pressurized gas downstream from said vaporizer (132) and upstream from said end user; and/or
(ii) a pressure regulator associated with said conduit (135) for regulating gas pressure before it is delivered to said end user.

14. The fluid delivery system of any one of claims 10 to 13 wherein said end user is an internal combustion engine, and said process fluid is a combustible fuel, and said conduit (135) is adapted to deliver said fuel to a fuel injection valve (144, 244).

15. The fluid delivery system of claim 14 wherein said fuel injection valve (144, 244) has a nozzle disposed in a combustion chamber of said engine whereby said fuel is introducible directly into a combustion chamber of said engine.

16. The fluid delivery system of claim 14 or 15 wherein said engine is the primer mover for a vehicle.

17. The fluid delivery system of any one of claims 14 to 16 wherein said heat exchange fluid is engine coolant and said system further comprises piping connecting a cooling jacket of said engine to a heat exchange fluid inlet of said vaporizer (132).

18. The fluid delivery system of any one of claims 10 to 17 wherein said pump (114, 214A, 214B) is disposed within the cryogen space of said storage vessel (110, 210A, 210B).

19. The fluid delivery system of any one of claims 10 to 18 wherein said storage vessel (110, 210A, 210B), said pump (114, 214A, 214B), and said vaporizer (132) are each one of a plurality of like components arranged in parallel, with each one of said vaporizers (132) comprising an outlet in communication with said conduit (135), said controller (150, 250) being programmable to start one of said plurality of pumps (114, 214A, 214B) that is idle when operation of another one of said pumps (114, 214A, 214B) is temporarily suspended, if at least one predefined enabling condition is satisfied and process fluid pressure is less than said predetermined high pressure threshold.

20. The fluid delivery system of claim 19 further comprising a respective temperature sensor (136, 236A, 236B) for measuring:
(i) process fluid temperature inbetween each one of said vaporizer (132) outlets and respective one-way valves upstream from said conduit (135); or
(ii) heat exchange fluid temperature near a heat exchange fluid outlet for each vaporizer (132) and said controller (150, 250) is programmable to enable operation of a pump (114, 214A, 214B) if heat exchange fluid temperature for a respective vaporizer (132) is above a predetermined value; or
(iii) process fluid temperature inside each vaporizer (132) and said controller (150, 250) is programmable to enable operation of a pump (114, 214A, 214B) if process fluid temperature inside a respective vaporizer (132) is above a predetermined value.

## Patentansprüche

1. Verfahren zum Pumpen eines Prozessfluids aus einem Tieftemperaturspeicherbehälter (110, 210A, 210B) und Zuführen des Prozessfluids zu einem Endverbraucher in einer Gasphase, wobei das Verfahren die folgenden Schritte umfasst:
Starten einer Pumpe (114, 214A, 214B) und Pumpen des Prozessfluids von dem Speicherbehälter (110, 210A, 210B), wodurch das Prozessfluid mit Druck beaufschlagt wird, wenn der stromabwärts der Pumpe (114, 214A, 214B) gemessene Prozessfluiddruck unter einem vorgegebenen Niedrigdruckschwellenwert liegt;
Stoppen der Pumpe (114, 214A, 214B), wenn der Prozessfluiddruck über einem vorgegebenen Hochdruckschwellenwert liegt;
Leiten des Prozessfluids von der Pumpe (114, 214A, 214B) zu einem Verdampfer (132) und Übertragen von Wärme von einem Wärmetauscherfluid an das Prozessfluid, um das Prozessfluid von einer verflüssigten Form in die Gasphase zu überführen;
Zuführen des Prozessfluids von dem Verdampfer (132) zu dem Endverbraucher;
**dadurch gekennzeichnet,**
**dass** das Verfahren ferner die folgenden Schritte umfasst:
Messen der Prozessfluidtemperatur, nachdem das Prozessfluid aus dem Verdampfer (132) ausgetreten ist, und vorübergehendes Anhalten des Betriebs der Pumpe (114, 214A, 214B), wenn:
(i) die Prozessfluidtemperatur unter einer vorgegebenen Schwellenwerttemperatur liegt; oder
(ii) die Prozessfluidtemperatur für eine vorgegebene Anzahl von aufeinanderfolgenden Pumpzyklen unter einer vorgegebenen Schwellenwerttemperatur liegt; und
erneutes Starten der Pumpe (114, 214A, 214B), die angehalten wurde, wenn zumindest eine vorab definierte Freigabebedingung erfüllt ist und der Prozessfluiddruck niedriger als der vorgegebene Hochdruckschwellenwert ist.

2. Verfahren nach Anspruch 1, wobei die Pumpe (114, 214A, 214B) vorübergehend angehalten wird, wenn die Prozessfluidtemperatur für die vorgegebene Anzahl von aufeinanderfolgenden Pumpzyklen unter der vorgegebenen Schwellenwerttemperatur liegt.

3. Verfahren nach Anspruch 1 oder 2, wobei eine der vorab definierten Freigabebedingungen erfüllt ist, wenn:
(i) die Pumpe (114, 214A, 214B) für eine vorgegebene minimale Zeitdauer angehalten wurde; und/oder
(ii) das Prozessfluid stromabwärts des Verdampfers (132) eine Temperatur hat, die höher ist als die vorgegebene Schwellenwerttemperatur; und/oder
(iii) das Wärmetauscherfluid eine stromabwärts vom Verdampfer (132) gemessene Temperatur hat, die über einer vorgegebenen Temperatur liegt; und/oder
(iv) das Prozessfluid im Inneren des Verdampfers (132) eine Temperatur hat, die über einer vorgegebenen Temperatur liegt.

4. Verfahren nach einem der vorhergehenden Ansprüche, wobei das Prozessfluid ein Kraftstoff ist und das Verfahren ferner die Zufuhr von Kraftstoff zu einem Verbrennungsraum eines Brennkraftmaschine umfasst.

5. Verfahren nach Anspruch 4, das ferner das Einspritzen von zumindest etwas Kraftstoff durch ein Kraftstoffeinspritzventil (144, 244) direkt in den Verbrennungsraum umfasst.

6. Verfahren nach Anspruch 4 oder 5, wobei das Wärmetauscherfluid ein Kraftmaschinenkühlmittel ist und das Verfahren ferner das Leiten des Kraftmaschinenkühlmittels von einem Kraftmaschinenkühlsystem zu dem Verdampfer (132) umfasst.

7. Verfahren nach Anspruch 6, das ferner das Leiten des Kraftmaschinenkühlmittels zu dem Verdampfer (132) von einem Auslass eines Kühlmantels der Kraftmaschine umfasst.

8. Verfahren nach einem der vorhergehenden Ansprüche, wobei der Speicherbehälter (110, 210A, 210B) ein erster von zwei Speicherbehältern (110, 210A, 210B) ist, wobei die Pumpe (114, 214A, 214B) eine erste von zwei Pumpen (114, 214A, 214B) ist, wobei der Verdampfer (132) ein erster von zwei Verdampfern (132) ist und wobei das Verfahren ferner die folgenden Schritte umfasst:
Starten einer zweiten Pumpe (114, 214A, 214B) und Pumpen des Prozessfluids von einem zweiten Speicherbehälter (110, 210A, 210B), wobei das Prozessfluid mit Druck beaufschlagt wird, wenn der Betrieb der ersten Pumpe (114, 214A, 214B) vorübergehend angehalten wurde, wenn zumindest eine vorab definierte Freigabebedingung für die zweite Pumpe (114, 214A, 214B) erfüllt ist und wenn der stromabwärts von der zweiten Pumpe (114, 214A, 214B) gemessene Prozessfluiddruck unter einem vorgegebenen Hochdruckschwellenwert liegt;
Anhalten der zweiten Pumpe (114, 214A, 214B), wenn der Prozessfluiddruck höher ist als ein vorgegebener Hochdruckschwellenwert;
Leiten des Prozessfluids von der zweiten Pumpe (114, 214A, 214B) zu einem zweiten Verdampfer (132) und Übertragen von Wärme von dem Wärmetauscherfluid an das Prozessfluid, um das Prozessfluid von einer verflüssigten Form in die Gasphase zu überführen;
Zuführen des Prozessfluids von dem zweiten Verdampfer (132) an den Endverbraucher;
Messen der Prozessfluidtemperatur, nachdem das Prozessfluid aus dem zweiten Verdampfer (132) ausgetreten ist, und vorübergehendes Anhalten des Betriebs der zweiten Pumpe (114, 214A, 214B), wenn die Prozessfluidtemperatur stromabwärts vom zweiten Verdampfer (132) unter einer vorgegebenen Schwellenwerttemperatur liegt;
erneutes Starten der ersten Pumpe (114, 214A, 214B), wenn zumindest eine vorab definierte Freigabebedingung zum Neustart der ersten Pumpe (114, 214A, 214B) erfüllt ist, die zweite Pumpe (114, 214A, 214B) vorübergehend angehalten wurde und der Prozessfluiddruck niedriger als der vorgegebene Hochdruckschwellenwert ist; und
erneutes Starten der zweiten Pumpe (114, 214A, 214B), wenn zumindest eine vorab definierte Freigabebedingung zum Neustart der zweiten Pumpe (114, 214A,
214B) erfüllt ist, die erste Pumpe (114, 214A, 214B) vorübergehend angehalten wurde und der Prozessfluiddruck niedriger als ein vorgegebener Hochdruckschwellenwert ist.

9. Verfahren nach Anspruch 8, wobei eine der zuvor definierten Freigabebedingungen zum Neustart der ersten oder der zweiten Pumpe (114, 214A, 214B), deren Betrieb angehalten wurde, erfüllt ist, wenn:
(i) die andere Pumpe (114, 214A, 214B) den vorhergehenden Pumphub durchgeführt hat; und/oder
(ii) die stromabwärts von der angehaltenen Pumpe (114, 214A, 214B) gemessene Prozessfluidtemperatur höher als der vorgegebene Temperaturschwellenwert ist; und/oder
(iii) die angehaltene Pumpe (114, 214A, 214B) für eine vorgegebene minimale Zeitdauer im Leerlauf war; und/oder
(iv) die Prozessfluidtemperatur, die im Inneren des Verdampfers (132), der der angehaltenen Pumpe (114, 214A, 214B) zugeordnet ist, gemessen wurde, über einer vorgegebenen Temperatur liegt; und/oder
(v) die Wärmetauscherfluidtemperatur, die bei dem Auslass des Verdampfers (132), der der angehaltenen Pumpe (114, 214A, 214B) zugeordnet ist, gemessen wurde, über einer vorgegebenen Temperatur liegt.

10. Fluidzufuhrsystem, das Bestandteile umfasst, die zusammenwirken, um ein verflüssigtes Prozessfluid zu speichern und dieses Prozessfluid in einer Gasphase einem Endverbraucher zuzuführen, wobei das Fluidzufuhrsystem Folgendes umfasst:
einen Speicherbehälter (110, 210A, 210B) zum Aufnehmen des verflüssigten Prozessfluids bei tiefkalten Temperaturen;
eine Pumpe (114, 214A, 214B) mit einem Saugeinlass in Fluidverbindung mit einem Tiefkühlraum im Inneren des Speicherbehälters (110, 210A, 210B);
einen Verdampfer (132) mit einem Einlass in Fluidverbindung mit einer Auslassöffnung der Pumpe (114, 214A, 214B), wobei der Verdampfer (132) einen Wärmetauscher zum Übertragen von Wärmeenergie von einem Wärmetauscherfluid an das Prozessfluid umfasst, wobei die Wärmeenergie genutzt werden kann, um das verflüssigte Prozessfluid in die Gasphase zu überführen;
eine Leitung (135) in Fluidverbindung mit einem Auslass des Verdampfers (132),
um das Prozessfluid dem Endverbraucher zuzuführen; und
einen in der Leitung (135) angeordneten Drucksensor zum Messen des Prozessfluiddrucks und zum Ausgeben eines elektronischen Signals, das den Prozessfluiddruck darstellt;
**dadurch gekennzeichnet,**
**dass** das Fluidzufuhrsystem ferner Folgendes umfasst:
einen in der Leitung angeordneten Temperatursensor (136, 236A, 236B) zum Messen der Prozessfluidtemperatur und zum Ausgeben eines elektronischen Signals, das die Prozessfluidtemperatur repräsentiert; und
eine Steuerung (150, 250) in Kommunikation mit dem Temperatursensor (136, 236, 236B) und dem Drucksensor, wobei die Steuerung programmierbar ist, um den Betrieb der Pumpe in Abhängigkeit von der Prozessfluidtemperatur und -druck, zu steuern bzw. zu regeln, wobei die Steuerung:
ausgelegt ist, der Pumpe (114, 214A, 214B) zu befehlen, zu arbeiten, wenn der Prozessfluiddruck unter einem vorgegebenen Niedrigdruckschwellenwert liegt;
ausgelegt ist, der Pumpe (114, 214A, 214B) zu befehlen, anzuhalten, wenn der Prozessfluiddruck über einem vorgegebenen Hochdruckschwellenwert liegt;
ausgelegt ist, der Pumpe (114, 214A, 214B) zu befehlen, den Betrieb vorübergehend anzuhalten, wenn die Prozessfluidtemperatur niedriger als eine vorgegebene Schwellenwerttemperatur ist, wobei dieser Befehl zum Anhalten des Betriebs einem Befehl zum Betreiben der Pumpe (114, 214A, 214B) auf Basis des Prozessfluiddrucks übergeordnet ist; und
ausgelegt ist, der Pumpe (114, 214A, 214B) zu befehlen, nach einem Anhalten des Betriebs neu zu starten, wenn zumindest eine vorab definierte Freigabebedingung erfüllt ist und wenn der Prozessfluiddruck niedriger als der vorgegebene Hochdruckschwellenwert ist.

11. Fluidzufuhrsystem nach Anspruch 10, wobei eine der vorab definierten Freigabebedingungen erfüllt ist, wenn:
(i) die Pumpe (114, 214A, 214B), die angehalten worden ist, für zumindest eine vorgegebene minimale Zeitdauer im Leerlauf gewesen ist; und/oder
(ii) die Prozessfluidtemperatur in der Zuleitung (135) über einer vorgegebenen Schwellenwerttemperatur liegt.

12. Fluidzufuhrsystem nach Anspruch 10, das ferner einen Temperatursensor (132A, 139) umfasst, der angeordnet ist in:
(i) einer Auslassleitung für Wärmetauscherfluid, das aus dem Verdampfer (132) austritt, von dem elektronische Signale, die die Temperatur des Wärmetauscherfluids darstellen, an die Steuerung (150, 250) gesendet werden können, und wobei eine der vorab definierten Freigabebedingungen erfüllt ist, wenn das Wärmetauscherfluid eine Temperatur hat, die über einer vorgegebenen Temperatur liegt; oder
(ii) einem Prozessfluiddurchgang im Inneren des Verdampfers (132), von dem elektronische Signale, die das Prozessfluid darstellen, an die Steuerung (150, 250) gesendet werden können, und wobei eine der vorab definierten Freigabebedingungen erfüllt ist, wenn die Prozessfluidtemperatur im Inneren des Verdampfers (132) über eine vorgegebenen Temperatur liegt.

13. Fluidzufuhrsystem nach einem der Ansprüche 10 bis 12, das ferner Folgendes umfasst:
(i) einen Sammelbehälter (138, 238) zum Aufnehmen von mit Druck beaufschlagtem Gas stromabwärts vom Verdampfer (132) und stromaufwärts zum Endverbraucher; und/oder
(ii) einen Druckregulierer, der der Leitung (135) zugeordnet ist, zum Regulieren des Gasdrucks vor der Zufuhr an den Endverbraucher.

14. Fluidzufuhrsystem nach einem der Ansprüche 10 bis 13, wobei der Endverbraucher eine Brennkraftmaschine ist und wobei das Prozessfluid ein brennbarer Kraftstoff ist und wobei die Leitung (135) ausgelegt ist, den Kraftstoff einem Kraftstoffeinspritzventil (144, 244) zuzuführen.

15. Fluidzufuhrsystem nach Anspruch 14, wobei das Kraftstoffeinspritzventil (144, 244) eine Düse hat, die in einem Verbrennungsraum der Kraftmaschine angeordnet ist, wodurch der Kraftstoff direkt in einen Verbrennungsraum der Kraftmaschine eingeleitet werden kann.

16. Fluidzufuhrsystem nach Anspruch 14 oder 15, wobei die Kraftmaschine die Antriebsmaschine für ein Fahrzeug ist.

17. Fluidzufuhrsystem nach einem der Ansprüche 14 bis 16, wobei das Wärmetauscherfluid ein Kraftmaschinenkühlmittel ist und das System ferner eine Leitung umfasst, die einen Kühlmantel der Kraftmaschine mit einem Wärmetauscherfluldeinlass des Verdampfers (132) verbindet.

18. Fluidzufuhrsystem nach einem der Ansprüche 10 bis 17, wobei die Pumpe (114, 214A, 214B) in dem Tiefkühlraum des Speicherbehälters (110, 210A, 210B) angeordnet ist.

19. Fluidzufuhrsystem nach einem der Ansprüche 10 bis 18, wobei der Speicherbehälter (110, 210A, 210B), die Pumpe (114, 214A, 214B) und der Verdampfer (132) jeweils einer von mehreren gleichartigen parallel angeordneten Bauteilen ist, wobei jeder der Verdampfer (132) einen Auslass in Verbindung mit der Leitung (135) umfasst, wobei die Steuerung (150, 250) programmiert werden kann, eine der mehreren Pumpen (114, 214A, 214B) zu starten, die im Leerlauf ist, wenn der Betrieb einer weiteren der Pumpen (114, 214A, 214B) vorübergehend angehalten wurde, wenn zumindest eine der vorab definierten Freigabebedingungen erfüllt ist und wenn der Prozessfluiddruck niedriger als ein vorgegebener Hochdruckschwellenwert ist.

20. Fluidzufuhrsystem nach Anspruch 19, das ferner einen jeweiligen Temperatursensor (136, 236A, 236B) umfasst zum Messen :
(i) der Prozessfluidtemperatur jeweils zwischen jedem der Auslässe der Verdampfer (132) und den jeweiligen Einwegventilen stromaufwärts der Leitung (135); oder
(ii) der Wärmetauscherfluidtemperatur bei einem Wärmetauscherfluidauslass für jeden Verdampfer (132), wobei die Steuerung (150, 250) programmiert werden kann, den Betrieb einer Pumpe (114, 214A, 214B) zu ermöglichen, wenn die Wärmetauscherfluidtemperatur für einen jeweiligen Verdampfer (132) über einem vorgegebenen Wert liegt; oder
(iii) der Prozessfluidtemperatur im Inneren jedes Verdampfers (132), wobei die Steuerung (150, 250) programmiert werden kann, den Betrieb einer Pumpe (114, 214A, 214B) zu ermöglichen, wenn die Prozessfluidtemperatur im Inneren eines jeweiligen Verdampfers (132) über einem vorgegebenen Wert liegt.

## Revendications

1. Procédé destiné à pomper un fluide de process à partir d'un récipient (110, 210A, 210B) de stockage cryogénique et à amener ledit fluide de process à un consommateur final dans une phase gazeuse, ledit procédé comportant les étapes consistant à :
mettre en marche une pompe (114, 214A, 214B) et pomper ledit fluide de process à partir dudit récipient (110, 210A, 210B) de stockage, mettant ainsi sous pression ledit fluide de process, lorsque la pression du fluide de process mesurée en aval de ladite pompe (114, 214A, 214B) est inférieure à un seuil prédéterminé de basse pression ;
arrêter ladite pompe (114, 214A, 214B) lorsque ladite pression du fluide de process est supérieure à un seuil prédéterminé de haute pression ;
diriger ledit fluide de process de ladite pompe (114, 214A, 214B) vers un vaporiseur (132) et transférer de la chaleur d'un fluide d'échange de chaleur audit fluide de process pour convertir ledit fluide de process d'une forme liquéfiée en ladite phase gazeuse ;
amener ledit fluide de process dudit vaporiseur (132) audit consommateur final ;
**caractérisé en ce**
**que** le procédé comporte en outre les étapes consistant à :
mesurer la température du fluide de process après que ledit fluide de process a quitté ledit vaporiseur (132) et suspendre temporairement le fonctionnement de ladite pompe (114, 214A, 214B) lorsque :
(i) ladite température du fluide de process est inférieure à une température seuil prédéterminée ; ou
(ii) ladite température du fluide de process est inférieure à une température seuil prédéterminée pendant un nombre prédéterminé de cycles consécutifs de pompe ; et
remettre en marche ladite pompe (114, 214A, 214B) qui a été suspendue si au moins une condition prédéfinie de validation est satisfaite et si la pression du fluide de process est inférieure audit seuil prédéterminé de haute pression.

2. Procédé selon la revendication 1, ladite pompe (114, 214A, 214B) étant temporairement suspendue lorsque ladite température du fluide de process est inférieure à ladite température seuil prédéterminée pendant ledit nombre prédéterminé de cycles consécutifs de pompe.

3. Procédé selon la revendication 1 ou 2, une desdites conditions prédéfinies de validation étant satisfaite lorsque :
(i) ladite pompe (114, 214A, 214B) a été suspendue pendant un laps de temps minimal prédéterminé ; et / ou
(ii) ledit fluide de process présente une température en aval dudit vaporiseur (132) qui est supérieure à ladite température seuil prédéterminée ; et / ou
(iii) ledit fluide d'échange de chaleur présente une température mesurée en aval dudit vaporiseur (132) qui est supérieure à une température prédéterminée ; et / ou
(iv) ledit fluide de process présente une température à l'intérieur dudit vaporiseur (132) qui est supérieure à une température prédéterminée.

4. Procédé selon l'une quelconque des revendications précédentes, ledit fluide de process étant un carburant et ledit procédé comportant en outre l'étape consistant à amener ledit carburant à une chambre de combustion d'un moteur à combustion interne.

5. Procédé selon la revendication 4, comportant en outre l'étape consistant à injecter au moins une partie dudit carburant via un injecteur (144, 244) de carburant directement dans ladite chambre de combustion.

6. Procédé selon la revendication 4 ou 5, ledit fluide d'échange de chaleur étant un liquide de refroidissement du moteur et ledit procédé comportant en outre l'étape consistant à diriger ledit liquide de refroidissement du moteur d'un système de refroidissement du moteur vers ledit vaporiseur (132).

7. Procédé selon la revendication 6, comportant en outre l'étape consistant à diriger ledit liquide de refroidissement du moteur vers ledit vaporiseur (132) à partir d'une sortie d'une chemise de refroidissement dudit moteur.

8. Procédé selon l'une quelconque des revendications précédentes, ledit récipient (110, 210A, 210B) de stockage étant le premier de deux récipients (110, 210A, 210B) de stockage, ladite pompe (114, 214A, 214B) étant la première de deux pompes (114, 214A, 214B), et ledit vaporiseur (132) étant le premier de deux vaporiseurs (132), et ledit procédé comportant en outre les étapes consistant à :
mettre en marche une deuxième pompe (114, 214A, 214B) et pomper ledit fluide de process à partir d'un deuxième récipient (110, 210A, 210B) de stockage, mettant ainsi sous pression ledit fluide de process, lorsque le fonctionnement de ladite première pompe (114, 214A, 214B) est temporairement suspendu, au moins une condition prédéfinie de validation pour ladite deuxième pompe (114, 214A, 214B) étant satisfaite et ladite pression du fluide de process en aval de ladite deuxième pompe (114, 214A, 214B) étant inférieure audit seuil prédéterminé de haute pression ;
arrêter ladite deuxième pompe (114, 214A, 214B) lorsque ladite pression du fluide de process est supérieure audit seuil prédéterminé de haute pression ;
diriger ledit fluide de process de ladite deuxième pompe (114, 214A, 214B) vers un deuxième vaporiseur (132) et transférer de la chaleur dudit fluide d'échange de chaleur audit fluide de process pour convertir ledit fluide de process d'une forme liquéfiée en ladite phase gazeuse ;
amener ledit fluide de process dudit deuxième vaporiseur (132) audit consommateur final ;
mesurer la température du fluide de process après que ledit fluide de process a quitté ledit deuxième vaporiseur (132) et suspendre temporairement le fonctionnement de ladite deuxième pompe (114, 214A, 214B) lorsque ladite température du fluide de process en aval dudit deuxième vaporiseur (132) est inférieure à ladite température seuil prédéterminée ;
remettre en marche ladite première pompe (114, 214A, 214B) si au moins une condition prédéfinie de validation pour la remise en marche de ladite première pompe (114, 214A, 214B) est satisfaite, ladite deuxième pompe (114, 214A, 214B) étant temporairement suspendue et la pression du fluide de process étant inférieure au seuil prédéterminé de haute pression ; et
remettre en marche ladite deuxième pompe (114, 214A, 214B) si au moins une condition prédéfinie de validation pour la remise en marche de ladite deuxième pompe (114, 214A, 214B) est satisfaite, ladite première pompe (114, 214A, 214B) étant temporairement suspendue et la pression du fluide de process étant inférieure au seuil prédéterminé de haute pression.

9. Procédé selon la revendication 8, une desdites conditions prédéfinies de validation pour la remise en marche de l'une desdites première et deuxième pompes (114, 214A, 214B) dont le fonctionnement a été suspendu étant satisfaite lorsque :
(i) l'autre pompe (114, 214A, 214B) a effectué la course de pompe précédente ; et / ou
(ii) la température du fluide de process mesurée en aval de ladite pompe suspendue (114, 214A, 214B) est supérieure audit seuil prédéterminé de température ; et /ou
(iii) ladite pompe suspendue (114, 214A, 214B) a été au repos pendant un laps de temps minimal prédéterminé ; et / ou
(iv) la température du fluide de process mesurée à l'intérieur dudit vaporiseur (132) qui est associé à ladite pompe suspendue (114, 214A, 214B) est supérieure à une température prédéterminée ; et / ou
(v) lorsque la température du fluide d'échange de chaleur mesurée à la sortie dudit vaporiseur (132) qui est associé à ladite pompe suspendue (114, 214A, 214B), est supérieure à une température prédéterminée.

10. Système d'amenée de fluide comportant des composants qui coopèrent entre eux pour stocker un fluide de process liquéfié et amener ledit fluide de process dans une phase gazeuse à un consommateur final, ledit système d'amenée de fluide comportant :
un récipient (110, 210A, 210B) de stockage servant à contenir ledit fluide de process liquéfié à des températures cryogéniques ;
une pompe (114, 214A, 214B) dotée d'une entrée d'aspiration en communication fluidique avec un espace pour cryogène à l'intérieur dudit récipient (110, 210A, 210B) de stockage ;
un vaporiseur (132) doté d'une entrée en communication fluidique avec une sortie de refoulement de ladite pompe (114, 214A, 214B), ledit vaporiseur (132) comportant un échangeur de chaleur servant à transférer une énergie thermique d'un fluide d'échange de chaleur audit fluide de process, ladite énergie thermique étant ainsi susceptible d'être employée pour convertir ledit fluide de process liquéfié en ladite phase gazeuse ;
un conduit (135) en communication fluidique avec une sortie dudit vaporiseur (132) pour amener ledit fluide de process audit consommateur final; et
un capteur de pression disposé dans ledit conduit (135) pour mesurer la pression du fluide de process et émettre un signal électronique représentatif de la pression du fluide de process ;
**caractérisé en ce**
**que** ledit système d'amenée de fluide comporte en outre :
un capteur (136, 236A, 236B) de température disposé dans ledit conduit pour mesurer la température du fluide de process et émettre un signal électronique représentatif de ladite température du fluide de process ; et
une commande (150, 250) en communication avec ledit capteur (136, 236, 236B) de température et ledit capteur de pression, ladite commande étant programmable pour commander le fonctionnement des pompes en réaction à la température et à la pression du fluide de process, ladite commande étant ainsi :
prévue pour donner comme consigne à ladite pompe (114, 214A, 214B) de fonctionner lorsque la pression du fluide de process est inférieure à un seuil prédéterminé de basse pression ;
prévue pour donner comme consigne à ladite pompe (114, 214A, 214B) de s'arrêter lorsque la pression du fluide de process est supérieure à un seuil prédéterminé de haute pression ;
prévue pour donner comme consigne à ladite pompe (114, 214A, 214B) de suspendre temporairement le fonctionnement lorsque la température du fluide de process est inférieure à une température seuil prédéterminée, cette consigne de suspension du fonctionnement ayant la priorité sur une consigne de faire fonctionner ladite pompe (114, 214A, 214B) basée sur la pression du fluide de process ; et
prévue pour donner comme consigne à ladite pompe (114, 214A, 214B) de redémarrer à partir d'une suspension de fonctionnement si au moins une condition prédéfinie de validation est satisfaite et si la pression du fluide de process est inférieure au seuil prédéterminé de haute pression.

11. Système d'amenée de fluide selon la revendication 10, une desdites conditions prédéfinies de validation étant satisfaite lorsque :
(i) ladite pompe (114, 214A, 214B) qui a été suspendue a été au repos pendant au moins un laps de temps minimal prédéterminé ; et / ou
(ii) ladite température du fluide de process dans ledit conduit (135) est supérieure à ladite température seuil prédéterminée.

12. Système d'amenée de fluide selon la revendication 10, comportant en outre un capteur (132A, 139) de température disposé dans :
(i) un conduit de sortie pour fluide d'échange de chaleur quittant ledit vaporiseur (132), à partir duquel des signaux électroniques représentatifs de la température dudit fluide d'échange de chaleur sont susceptibles d'être envoyés à ladite commande (150, 250), et une desdites conditions prédéfinies de validation étant satisfaite lorsque ledit fluide d'échange de chaleur présente une température qui est supérieure à une température prédéterminée ; ou
(ii) un passage de fluide de process à l'intérieur dudit vaporiseur (132) à partir duquel des signaux électroniques représentatifs du fluide de process sont susceptibles d'être envoyés à ladite commande (150, 250), et une desdites conditions prédéfinies de validation étant satisfaite lorsque la température du fluide de process à l'intérieur dudit vaporiseur (132) est supérieure à une température prédéterminée.

13. Système d'amenée de fluide selon l'une quelconque des revendications 10 à 12, comportant en outre :
(i) un récipient accumulateur (138, 238) servant à contenir du gaz sous pression en aval dudit vaporiseur (132) et en amont dudit consommateur final ; et / ou
(ii) un régulateur de pression associé audit conduit (135) pour réguler la pression de gaz avant qu'il soit amené jusqu'audit consommateur final.

14. Système d'amenée de fluide selon l'une quelconque des revendications 10 à 13. ledit consommateur final étant un moteur à combustion interne, et ledit fluide de process étant un carburant combustible, et ledit conduit (135) étant prévu pour amener ledit carburant à un injecteur (144, 244) de carburant.

15. Système d'amenée de fluide selon la revendication 14, ledit injecteur (144, 244) de carburant comprenant un ajutage disposé dans une chambre de combustion dudit moteur, ledit carburant pouvant ainsi être introduit directement dans une chambre de combustion dudit moteur.

16. Système d'amenée de fluide selon la revendication 14 ou 15, ledit moteur étant la machine motrice d'un véhicule.

17. Système d'amenée de fluide selon l'une quelconque des revendications 14 à 16, ledit fluide d'échange de chaleur étant un liquide de refroidissement du moteur et ledit système comportant en outre une tuyauterie reliant une chemise de refroidissement dudit moteur à une entrée de fluide d'échange de chaleur dudit vaporiseur (132).

18. Système d'amenée de fluide selon l'une quelconque des revendications 10 à 17, ladite pompe (114, 214A, 214B) étant disposée à l'intérieur de l'espace pour cryogène dudit récipient (110, 210A, 210B) de stockage.

19. Système d'amenée de fluide selon l'une quelconque des revendications 10 à 18, ledit récipient (110, 210A, 210B) de stockage, ladite pompe (114, 214A, 214B) et ledit vaporiseur (132) appartenant chacun à une pluralité de composants similaires agencés en parallèle, chacun desdits vaporiseurs (132) comportant une sortie en communication avec ledit conduit (135), ladite commande (150, 250) étant programmable pour mettre en marche une pompe de ladite pluralité de pompes (114, 214A, 214B) qui est au repos lorsque le fonctionnement d'une autre desdites pompes (114, 214A, 214B) est temporairement suspendu, si au moins une condition prédéfinie de validation est satisfaite et si la pression du fluide de process est inférieure audit seuil prédéterminé de haute pression.

20. Système d'amenée de fluide selon la revendication 19, comportant en outre un capteur (136, 236A, 236B) de température respectif servant à mesurer :
(i) la température du fluide de process entre chacune des sorties dudit vaporiseur (132) et des clapets anti-retour respectifs en amont dudit conduit (135) ; ou
(ii) la température du fluide d'échange de chaleur près d'une sortie de fluide d'échange de chaleur pour chaque vaporiseur (132) et ladite commande (150, 250) étant programmable pour valider le fonctionnement d'une pompe (114, 214A, 214B) si la température du fluide d'échange de chaleur pour un vaporiseur (132) respectif est supérieure à une valeur prédéterminée ; ou
(iii) la température du fluide de process à l'intérieur de chaque vaporiseur (132) et ladite commande (150, 250) étant programmable pour valider le fonctionnement d'une pompe (114, 214A, 214B) si la température du fluide de process à l'intérieur d'un vaporiseur (132) respectif est supérieure à une valeur prédéterminée.
